# EUROPEAN PATENT APPLICATION

(11) **EP 1 988 529 A1**
(43) Date of publication of application: **05.11.2008**
(21) Application number: 06714263.8
(22) Date of filing: 22.02.2006
(51) Int. Cl.: G09B 29/00, G01C 21/00, G06T 17/50, G09B 29/10

(54) **MAP DISPLAY SYSTEM, MAP DISPLAY METHOD FOR MAP DISPLAY SYSTEM, MAP DISPLAY DEVICE, AND PROGRAM**

(71) Applicant: Navitime Japan Co., Ltd., Tokyo 101-0041 (JP)
(72) Inventor: MATSUNAGA, Takayuki, Chiyoda-ku, Tokyo 101-0041 (JP)
(74) Representative: HOFFMANN EITLE
(86) International application number: PCT/JP2006/303123
(87) International publication number: WO 2007/096952

(57) **Abstract**

When a bird's-eye view map showing roads, the roads are emphatically displayed. A map display system comprises a database storing map data and display means for displaying an image of a planar map or a bird's-eye view according to the map data acquired from the database storing map image. The map display system further comprises image data creating means for creating image data on a planar map or image data on a bird's-eye view map created by projection transformation of a planar map with a predetermined display width coefficient, drawing means for drawing a map on basis of the image data on the planar map or the bird's-eye view map, and display width coefficient control means. When the image data on the bird's-eye view map is created, the display width coefficient control means controls image data creating means so that the roads shown on the planar map undergo projection transformation with a display width coefficient larger than the predetermined display width coefficient, and the display means displays the map of the image data drawn by the drawing means.

## Description

### TECHNICAL FIELD

The present invention relates to a map display system used in navigation systems and the like, and a map display method, map display device and program used in a map display system. More particularly, the present invention relates to a map display system which is devised so that when roads or other features on a map are converted into a quasi-three-dimensional pattern, and a display is performed as a bird's-eye view map, roads corresponding to a guide route found by a guide route seek are displayed with emphasis; and also relates to a map display method for the map display system, a map display device, and a program.

### BACKGROUND ART

Vehicle-mounted navigation devices that provide the driver of an automotive vehicle with guidance to the optimal route from starting point to destination have been proposed in the past. Conventional navigation devices have a map data storage device such as a CD-ROM, IC card, or the like which records map data; a display device; and vehicle movement detection devices which detect the current position and current bearing of the vehicle, such as a gyro GPS (global positioning system), vehicle speed sensor, and the like.

In such a navigation system, map data including the current position of the vehicle is read out from the map data storage device, and a map image of the area surrounding the vehicle position is depicted on the display device on the basis of the map data; furthermore, a vehicle position mark (location) is superimposed on the display image and displayed. The map image scrolls on the display in accordance with the movement of the vehicle, or the map image is fixed on the screen, and the vehicle position mark is moved. In this way, the system is devised so that it can be ascertained with a glance where the vehicle is currently traveling.

Ordinarily, vehicle-mounted navigation systems are provided with a route guidance function which is devised so that the driver can easily travel roads to the desired destination without any error. In this route guidance function, the lowest-cost route connecting the starting point and the destination is found by a route seek using map data by simulation calculations such as the Dijkstra method or the like, and the route that is found by this search is stored as the guidance route. The system is devised so that the driver can, while operating the vehicle, easily understand the optimal route to the destination. This is achieved by displaying a guidance route as a bold image on the map screen with a different color than other roads, or, when the vehicle approaches to within a certain fixed distance from the intersection points where the path of advance on the guidance route is to be altered, displaying arrows on-screen to indicate the path of advance at intersection points where the path of advance on the map image is to be altered.

The vehicle-mounted navigation device described above is a stand-alone navigation device which has a route seek function and map data. However, such a navigation device must have all of the functions required for navigation; this results in an increase in the size of the device, and the cost of the device is also high. In recent years, as a result of the development of communications and information processing technology, so-called communication type navigation systems in which a communication function operating via a network is added to a vehicle-mounted navigation device, and guidance route data and map data are acquired by data communications with a route seek server, have also become popular. Furthermore, systems in which mobile telephones are used as navigation terminals have also been practically adapted as navigation systems for pedestrian use.

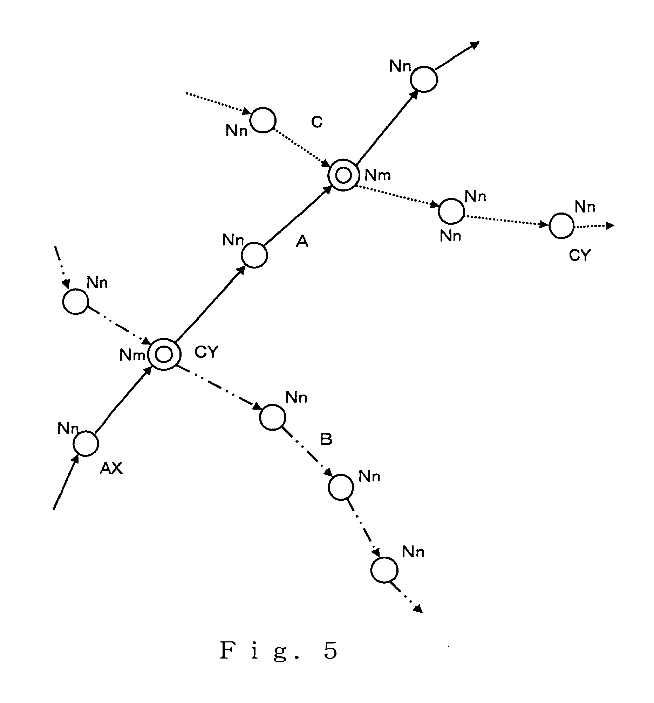

Road networks used for route seeking in pedestrian navigation systems and car navigation systems are constructed as shown below. For example, in a case where the roads comprise roads A, B, and C as shown in FIG. 5, the terminal points, intersection points, bending points, and the like of the roads A, B, and C are taken as nodes, the roads connecting the respective nodes are expressed as directional links, and the network is constructed from node data (latitude and longitude of nodes), link data (link numbers), and link cost data taking the link cost of the respective links (link distance, or time required in order to travel over a link) as data.

Specifically, in FIG. 5, Nn (single circle) and Nm (double circle) indicate nodes, with Nm (double circle) indicating the intersection point of roads. The directional links connecting the respective nodes are indicated by lines with arrows (solid line, dotted lines, or two-dot chain lines). In regard to the links, there are links oriented in the respective directions of rising and falling; however, in order to simplify the graphic illustration, only links with directions indicated by the arrows are shown in FIG. 5.

In cases where a route seek is performed using such road network data as a route seek database, the links connecting the node of the starting point and the node of the destination are traced, the link cost data is accumulated, a search is made for a route that minimizes the cumulative link cost, and guidance is performed. Specifically, in FIG. 5, in a case where a route seek is made with the node AX taken as the starting point and the node CY taken as the destination, the road A is traveled from the node AX, a right turn is made at the second intersection point so that the road C is entered, the links leading to the node CY are successively traced, the link cost is accumulated, a route which minimizes the cumulative value of the link cost is found, and guidance is thus provided.

In FIG. 5, no other route leading from the node AX to the node CY is shown; in actuality, however, such other routes exist. Accordingly, routes that can lead from the node AXC to the node CY are similarly searched for and found, and the route that has the lowest link cost among these routes is determined as the optimal route. For example, this method is performed using a universally known method called the Dijkstra method.

Road network data in a vehicle-mounted navigation system is constructed only from roads that can be traveled by automotive vehicles. Pedestrian road network data for roads that are exclusively for pedestrian use, roads in parks, squares in front of train stations, and the like where entry by automotive vehicles is forbidden is unnecessary. On the other hand, in pedestrian navigation systems, the network data is constructed so as to include pedestrian road network data such as roads that are exclusively for use by pedestrians, roads inside parks and squares in front of train stations where automotive vehicles are forbidden to enter, and the like, in addition to road networks that can be traveled by automotive vehicles. However, there is no need for network data for roads that are forbidden to pedestrians, such as high-speed roadways and the like.

In navigation systems in which a mobile telephone is used as a navigation terminal, the user may place the mobile telephone inside an automotive vehicle and use this mobile telephone in the same manner as a car navigation system. Accordingly, the route seek server has both road network data for an automotive vehicle route seek and pedestrian rode network data for a pedestrian route seek, and is constructed so that the user uses appropriate road network data in a route seek using movement means (pedestrian or automotive vehicle) which designates the route seek conditions.

Furthermore, in a pedestrian navigation system, pedestrians commonly use transportation facilities as well. Accordingly, the route seek server also has road and line network data for transportation facilities, and timetable data for trains, streetcars, buses, and the like that travel on various roads and lines. In cases where transportation facilities are designated as movement means, a route seek is performed using road and line network data and timetable data.

In such a navigation system, the guidance route is superimposed on the roads on the map in the navigation terminal, or structures such as important buildings or the like on the map are displayed, and the current position and direction of advance are made easy to recognize. Accordingly, the route seek server stores display map data including building data as a database in addition to road network data used for the route seek.

Such road network data and map data comprise unit data (mesh data) cut to a specified size by latitude and longitude. The route seek server distributes to the navigation terminal optimal guidance route data obtained as a result of the route seek. Furthermore, the route seek server distributes to the navigation terminal map data including the current position based on current position information (latitude and longitude) received from the navigation terminal, i.e., the surrounding eight mesh data centered on mesh data including the current position.

When the navigation terminal receives guidance route data and map data from the route seek server, this data is temporarily stored in the storage means, and a current position mark showing the current position of the navigation terminal, a map having a specified range including the current position, and the guidance route are developed in a VRAM, and displayed by the display means. In cases where the current position changes and the map data is insufficient, the navigation terminal sends a request for map data to the route seek server, and receives a transmission of the needed map data. The road network data and map data are stored in the database as vector data; the navigation terminal performs operations on the data as required, and the map and guidance route can be enlarged or rotated.

The method whereby the map is transmitted and displayed in the terminal device is not limited to navigation systems that perform a route seek and route guidance; a similar method is also used in map display systems that transmit the current position and desired position information, and receive transmissions of map data. Furthermore, there have also been attempts at systems which are devised so that when terminal devices such as navigation terminals and the like display a map, the map and important buildings on the map are converted into a quasi-three-dimensional form, and displayed as a bird's-eye view map so that conditions in the vicinity are displayed to the user as an image that is close to the actual scene, and are transmitted in real terms. A bird's-eye view map display refers to a display in which the viewpoint is placed in space above the flat plane of the road map or the like, and a situation in which the viewer looks down at the plane at an inclination from this viewpoint is displayed by the display device. If the road map is displayed as a bird's-eye view map, the current surrounding area can be enlarged and displayed, and at the same time, a broad range of the road map can be displayed from the vicinity of the current position to the destination.

For example, a map display device which depicts even the state of walls of buildings and performs a three-dimensional display is disclosed in patent document 1 (Japanese Laid-Open Patent Application No. 2001-27534). The map display device disclosed in this patent document 1 is intended to allow easy specification of building structures, and to make it easy to obtain a correspondence with the actual scene, in a map display device used as a vehicle navigation device. This device is devised so that window frame shapes and wall surface color are set and depicted for buildings displayed in three dimensions, in accordance with the type [of building] involved.

In this case, the number of tiers of window frames is set so as to be the same as the number of stories in actual buildings. Furthermore, the upper surface of the destination building is colored a deep red. Specifically, this map display device is a map display device which displays roads, building structures, and the like in three dimensions on the basis of map data stored in map data storage means, and which is devised so that the display means displays the building structures with modifications added in accordance with the characterizing features of the building structures.

In order to perform such a display, the map data storage device in the map display device disclosed in patent document 1 is constructed from a large-capacity storage medium such as a DVD-ROM, hard disk, CD-ROM or the like as a storage medium, and a playback device which plays back data stored in this storage medium. A three-dimensional digital (road) map database which includes road map data, and data for displaying various types of building structures or the like (official offices, banks, schools, train stations, airports, hotels, buildings, various types of facilities, and the like) in three dimensions, is recorded in the storage medium.

Furthermore, text information used for the character display of names of intersections, cities, villages, towns, and the like is recorded in a recording medium. The data used to display building structures among the road map data in three dimensions comprises position data, and polygon data expressing data for the plane shapes and heights (number of stories) of building structures. Furthermore, distinguishing data expressing types of building structures, and text information for displaying the names of building structures in characters, are recorded in the recording medium.

Furthermore, as a technique for displaying maps (road maps) in a bird's-eye view, a "vehicle map display device" is disclosed in the following patent document 2 (Japanese Laid-Open Patent Application No. 2002-206928). In a bird's-eye view map display, the road map range displayed by the display device varies greatly according to the set position of the viewpoint, the angle of looking downward from the viewpoint, and the like. Accordingly, if the set position of the viewpoint and the like are unfavorable, there is a danger that the road map in the direction in which the driver wishes to proceed will not be sufficiently displayed by the display device.

In order to counter such problems, the vehicle-mounted map display device disclosed in patent document 2 is a vehicle-mounted map display device comprising road map storage means for storing road map data relating to road maps, and display control means for causing the display device to display road map data, characterized in that this device comprises vehicle position detection means for detecting the current position of the vehicle, direction of advance detection means for detecting the direction of advance of the vehicle, destination setting means for setting the destination of the vehicle, and bird's-eye view map data conversion means for reading out road map data in a specified range from the road map storage means, and converting this data into bird's eye-view data, so that a bird's-eye view map in which the viewer looks down on the direction of advance of the vehicle from the space above the vicinity of the current position on the road map.
[Patent Document 1] Japanese Laid-Open Patent Application No. 2001-27534 (FIG. 1, FIG. 16, paragraph [0015], and paragraphs [0037] through [0045])
[Patent Document 2] Japanese Laid-Open Patent Application No. 2002-206928 (FIG. 4, paragraphs [0014] and [0015])

### DISCLOSURE OF THE INVENTION

### [Problems the Invention Is Intended To Solve]

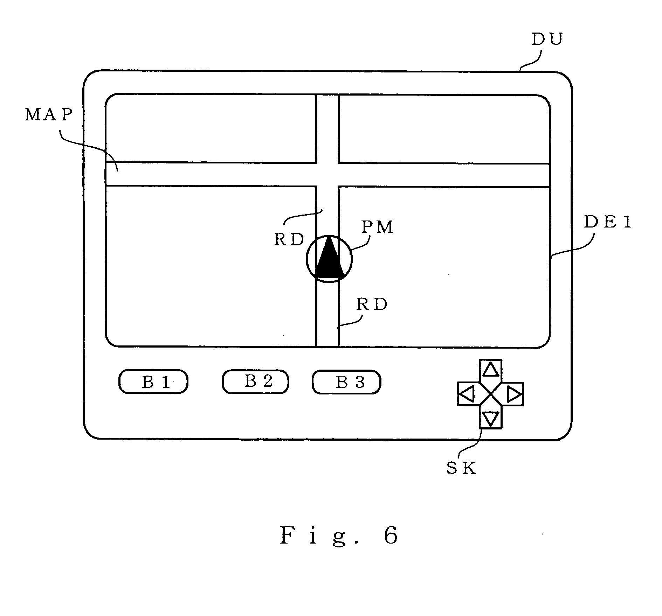

In map display devices used in navigation systems, in cases where the maps are displayed in a planar display, a map display image MAP with a specified reduction is displayed inside the display frame DE1 of the display means DU so that the current position mark PM is located in the center of the display image as shown in FIG. 6. Roads RD are also displayed as a flat plane so as to be indicated in the road image RD1, and the current position mark PM is displayed superimposed on the road RD during the advance of the vehicle. Furthermore, in FIG. 6, SK indicates a scroll key, and B1 and B2 indicate function selection buttons.

On the other hand, as was described above, map display devices are also known in which maps are displayed as a bird's-eye view. A bird's-eye view is a view in which the viewpoint is placed in the space above the planar figure of the map, and the ground surface is viewed from the sky as though being viewed from the viewpoint of a bird. Generally, in case where a map is displayed as a bird's-eye view, a map with a broader range than a planar map displayed as a flat surface can be displayed.

The display of a road map is converted from a plan view to a bird's-eye view using projection transformation. Specifically, a process in which a map image is prepared by subjecting the image to projection transformation into a bird's-eye view map at a fixed ratio with a certain point on the planar figure taken as the center point so that the map frame (display frame DE2) and road image on the map are parallel is the conventional method for displaying a bird's-eye view map.

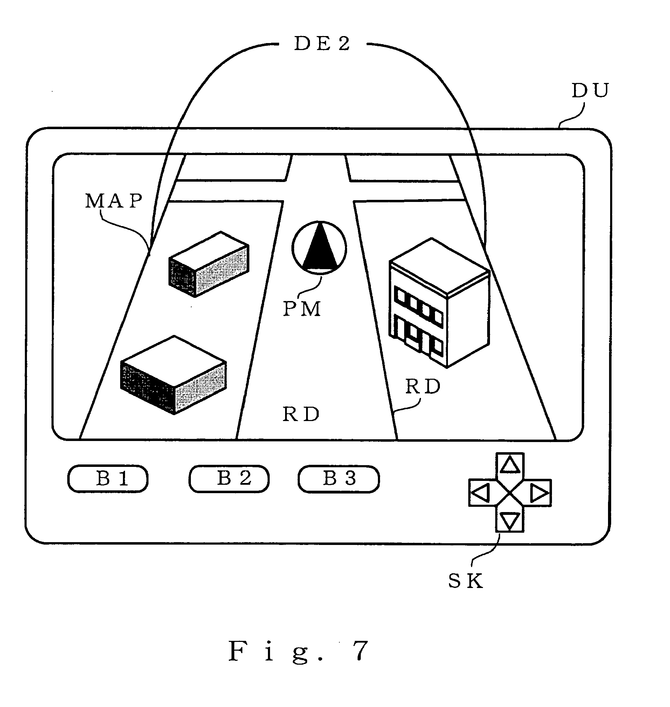

For example, in a case where a planar map image such as that shown in FIG. 6 is displayed as a bird's-eye view map image using a common method such as that disclosed in Patent Document 2, the image undergoes projection transformation at a fixed ratio using a certain point on the planar figure as the center point with the display width of the map image narrowed from the near side of the screen toward the deep side of the screen as shown in FIG. 7. This is done in order to impart a sense of perspective with the map image viewed slantwise from above. In this way, the width of the map image as a whole is displayed as a bird's-eye view map image inside a region in which the display width is successively narrowed from the near side of the display screen toward the deep side as shown in the display frame DE2. In this case, the image of the road RD also undergoes projection transformation at the same ratio from the near side of the screen toward the deep side; accordingly, this is converted into the road image RD1 which is parallel to the display frame DE2, and is converted into image data in which the width is narrowed in the direction of depth.

Thus, a conventional common bird's-eye view map display for creating and displaying image data is obtained by subjecting a planar map to projection transformation from a certain viewpoint. The ratio at which the display width of the map image is narrowed in the direction of depth of the screen is determined by the set position of the viewpoint. In accordance with this ratio, the map image and road image undergo projection transformation into image data on a bird's-eye view map which is successively narrowed in the direction of depth of the screen. In this specification, this ratio is called the display width coefficient.

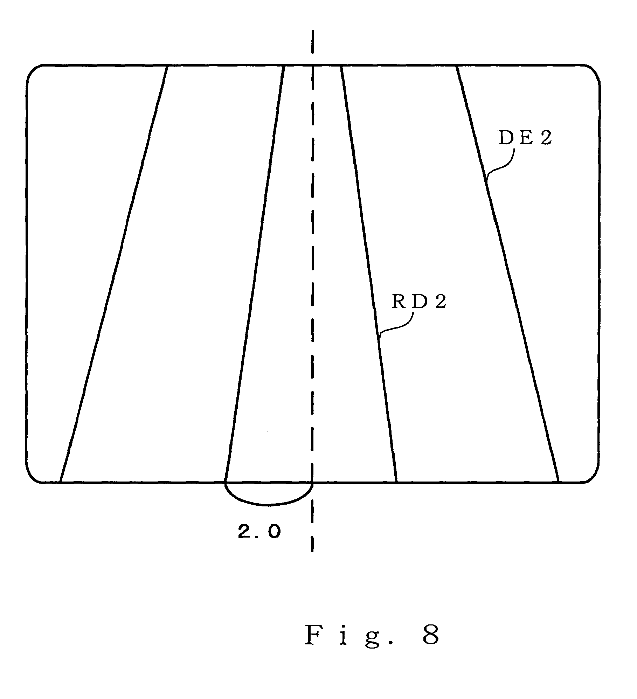

FIG. 8 is a diagram which shows in schematic form the display image obtained by subjecting the planar map shown in FIG. 6 to projection transformation into a bird's-eye view map with the display width coefficient set at "2." In this case, the map image as a whole is subjected to projection transformation, converted, and displayed so that the width on the near side of the screen (lower part of the screen) is "2," and so that the width on the deep side of the screen (upper part of the screen) is "1," as shown in the display frame DE2. The road image RD2 showing the road RD is also similarly subjected to projection transformation and displayed at the same display width coefficient of "2" so that the width on the near side is "2" and the width on the deep side is "1."

Generally, map images displayed by a display device trace a guidance route obtained by a route seek; accordingly, it is necessary to display a map that covers an area of some size. Therefore, in a map image displayed as a bird's-eye view, even if the current position mark PM is displayed on the guidance route, the map image as a whole is displayed with the width narrowed in the direction of depth of the display screen at a fixed ratio, i.e., with the display width coefficient fixed. Accordingly, a problem has been encountered insofar as it is difficult to recognize and distinguish road images, and especially the guidance route, on the bird's-eye view map that is displayed.

In the example of a bird's-eye view map image displayed in FIG. 7, a map image with an extremely narrow range is shown for purposes of description. Accordingly, road images and the guidance route can immediately be distinguished. In an actual map display, however, a map image with a broader range is displayed, resulting in a display in which roads and the guidance route are difficult to distinguish.

Generally, furthermore, in various foreign countries, road names and addresses are usually paired, and in most cases, places such as landmarks on the way, the destination, or the like can be inferred if the road name of the guidance route is known. Accordingly, the convenience is increased if road names can also be displayed on the map image that is displayed. However, in cases where the map image is displayed as a bird's-eye view of the type described above, the map image as a whole is displayed with the width narrowed in the direction of depth at a fixed ratio; accordingly, a problem also arises in that there is not enough room to display road names on the roads.

The inventor of the present application conducted various studies in order to solve the problems described above. As a result, the inventor discovered that the abovementioned problems can be solved by producing a display in which the map image as a whole is successively narrowed from the near side toward the deep side at a fixed display width coefficient as in an ordinary bird's-eye view map, and also producing an emphasized display of the guidance route displayed at a display width coefficient that is greater than the display width coefficient of the map image as a whole. The present invention was perfected based on this discovery. In this way, an area for displaying the road name of the guidance route can also be obtained.

Specifically, it is an object of the present invention to solve the problems described above, and to provide a map display system which is devised so that roads are displayed with emphasis when a map and roads are displayed as a bird's-eye view, and a map display method, map display device, and program used in this map display system.

### [Means for Solving the Abovementioned Problems]

A first aspect of the present invention is a map display system comprising a database for storing map data; and display means for displaying a planar map image or a bird's-eye view map image on the basis of map data acquired from the database for storing map images; the map display system being characterized in that the map display system has image data creating means for creating image data on a planar map or image data on a bird's-eye view map obtained by subjecting the planar map to projection transformation at a predetermined display width coefficient, drawing means for drawing the image data on the planar map or image data on the bird's-eye view map, and display width coefficient control means; and when the image data on the bird's-eye view map is created, the display width coefficient control means controls the image data creating means so that roads on the planar map undergo projection transformation at a display width coefficient that is larger than the predetermined display width coefficient, and the display means displays the image data drawn by the drawing means.

A second aspect of the present invention is the map display system of the first aspect, characterized in that when roads on the planar map undergo projection transformation at a display width coefficient that is greater than the predetermined display width coefficient, the image data creating means creates image data in which image data showing road names of the roads is superimposed on the road images that have underwent projection transformation.

Furthermore, a third aspect of the present invention is a map display method in a map display system comprising a database for storing map data, and display means for displaying a planar map image or a bird's-eye view map image on the basis of map data acquired from the database in which map images are stored; the map display method being characterized in that the map display system is provided with image data creating means for creating image data on a planar map or image data on a bird's-eye view map obtained by subjecting the planar map to projection transformation at a predetermined display width coefficient, drawing means for drawing the image data on the planar map or image data on the bird's-eye view map, and display width coefficient control means; and the method having a step in which map data is acquired from the database for storing map images; a step in which the display width coefficient control means controls the image data creating means so that when the bird's eye view image data is created, roads on the planar map undergo projection transformation at a display width coefficient that is larger than the predetermined display width coefficient; and a step in which the image data drawn by the drawing means is displayed by the display means.

A fourth aspect of the present invention is the map display system of the third aspect, characterized in that the map display method further comprises a step in which the image data creating means creates image data such that image data indicating road names of roads is superimposed on the projection-transformed road images when roads on the planar map undergo projection transformation at a display width coefficient that is greater than the predetermined display width coefficient.

Furthermore, a fifth aspect of the present invention is a map display device which is connected via a network to a route seek server having a database for storing map data; the map display device characterized in that the map display device comprises display means for displaying planar map images or bird's-eye view map images on the basis of map data acquired from the database for storing map images, and also comprising image data creating means for creating image data on a planar map, or image data on a bird's-eye view map obtained by subjecting the planar map to projection transformation at a predetermined display width coefficient, drawing means for drawing the image data on the planar map or image data on the bird's-eye view map, and display width coefficient control means; and when image data on the bird's-eye view map is created, the display width coefficient control means controls the image data creating means so that roads on the planar map undergo projection transformation at a display width coefficient that is greater than the predetermined display width coefficient, and the display means displays the image data that is drawn by the drawing means.

A sixth aspect of the present invention is the map display system of the fifth aspect, characterized in that when roads on the planar map undergo projection transformation at a display width coefficient that is greater than the predetermined display width coefficient, the image data creating means creates image data such that image data indicating road names of the roads is superimposed on the road images that have underwent projection transformation.

Furthermore, a seventh aspect of the present invention is a program characterized in that a computer which constitutes a map display device connected via a network to a route seek server having a database for storing map data, and which comprises display means for displaying a planar map image or a bird's-eye view map image on the basis of map data acquired from the database for storing map images, image data creating means for creating image data on a planar map or image data on a bird's-eye view map obtained by subjecting the planar map to projection transformation at a predetermined display width coefficient, drawing means for drawing the image data on the planar map or image data on the bird's-eye view map, and display width coefficient control means, is caused to execute a process as the display width coefficient control means for controlling the image data creating means so that when the image data on the bird's-eye view map is created, roads on the planar map undergo projection transformation at a display width coefficient that is greater than the predetermined display width coefficient; and a process for displaying the image data drawn by the drawing means on the display means.

An eighth aspect of the present invention is the program of the seventh aspect, characterized in that when the roads on the planar map undergo projection transformation at a display width coefficient that is greater than the predetermined display width coefficient, the computer that constitutes the map display device is caused to execute a process as the image data creating means for creating image data such that image data indicating the names of the roads is superimposed on the road images obtained by projection transformation.

### [Effect of the Invention]

According to the first aspect of the present invention, the map display system comprises a database for storing map data; and display means for displaying a planar map image or a bird's-eye view map image on the basis of map data acquired from the database for storing map images, image data creating means for creating image data on a planar map or image data on a bird's-eye view map obtained by subjecting the planar map to projection transformation at a predetermined display width coefficient, drawing means for drawing the image data on the planar map or image data on the bird's-eye view map, and display width coefficient control means, and when the image data on the bird's-eye view map is created, the display width coefficient control means controls the image data creating means so that roads on the planar map undergo projection transformation at a display width coefficient that is larger than the predetermined display width coefficient, and the display means displays the image data drawn by the drawing means.

In such a construction, road image data is created with the display width coefficient used in the projection transformation of the road image set at a larger value than the display width coefficient used in the projection transformation of the map image as a whole. As a result, the road image is displayed with a greater width on the near side of the display screen so that this image can be displayed as a bird's-eye view map in which roads are emphasized (strengthened), and the road image corresponding to the guidance route in particular can readily be distinguished.

The second aspect of the present invention is the map display system of the first aspect, wherein the image data creating means creates image data such that image data indicating the road names of roads is superimposed on a road image obtained by the projection transformation described above when the roads on the planar map undergo projection transformation at a display width coefficient that is greater than the predetermined display width coefficient mentioned above.

As a result of such a construction, if road names are displayed on the displayed roads with the display width coefficient used in the projection transformation of the road portions set at a larger value than the display width coefficient used in the projection transformation of the map as a whole, the user can easily distinguish the roads, and can ascertain the road names. Accordingly, in regions where road names and addresses are paired, the user can ascertain the road names of the guidance route, and the convenience of the map display system can be increased.

Furthermore, the third and fourth aspects of the present invention can provide a map display method for use in the map display systems of the first and second aspects of the present invention, and the fifth and sixth aspects of the present invention can respectively provide map display devices constituting the map display systems of the first and second aspects. Furthermore, the seventh and eighth aspects of the present invention can respectively provide programs for the computers constituting the map display devices of the fifth and sixth aspects of the present invention.

### BRIEF DESCRIPTION OF THE DRAWINGS

FIG. 1 is a diagram showing the construction of a navigation system equipped with a map display device according to an embodiment of the present invention;
FIG. 2 is a diagram showing one example of the display image of a bird's-eye view map displayed by display means in the present invention;
FIG. 3 is a diagram showing in model form a display image in which a planar map is subjected to projection transformation to yield a bird's view with the road image display width coefficient increased with respect to the display width coefficient of the overall map in accordance with the present invention.
FIG. 4 is a diagram showing one example of a display image in which road names are displayed in a road image displayed as a bird's-eye view map according to the present invention;
FIG. 5 is a schematic diagram used to illustrate road network data used for route seeking;
FIG. 6 is a diagram showing one example of a display screen displaying a planar map image;
FIG. 7 is a diagram showing one example of a display screen displaying the map image in FIG. 6 using a conventional bird's-eye view map; and
FIG. 8 is a diagram showing in schematic form a display image in which the planar map in FIG. 6 is subjected to projection transformation to yield a bird's-eye view map with the display width coefficient set at "2."

### [Key to Symbols]

- 10: navigation system
- 12: network
- 20: route seek server
- 21: control means
- 22: transmitting/receiving means
- 23: route seek means
- 24: distribution data edit means
- 25: operation/display means
- 26: map/building image data
- 27: route seek network data
- 28: road network data
- 29: pedestrian network data
- 30: map display device (mobile terminal device)
- 31: control means
- 32: route seek request means
- 33: guidance data storage means
- 34: map/route storage means
- 35: GPS processing means
- 36: operation/display means operation/display means
- 37: drawing means
- 38: image data creating means
- 39: display width coefficient control means
- PM: current position mark
- DU: display means
- MAP: map image
- RD: road
- RD0: through RD2 road images
- DE1: display width (planar view)
- DE2: display width (bird's-eye view map)

### BEST MODE FOR CARRYING OUT THE INVENTION

Concrete examples of the present invention will be described in detail below with reference to embodiments and the drawings. However, the embodiments shown below are embodiments showing a navigation system equipped with a map display device in order to indicate concrete examples of the technical concept of the present invention, and do not mean that the present invention is limited to this navigation system equipped with a map display device; the present invention can equally be applied to map display systems or the like using map display devices of other embodiments included in the patent claims.

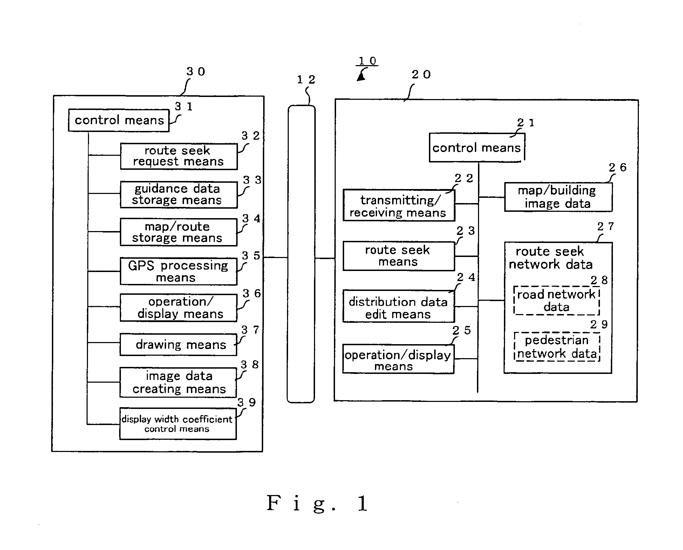

As is shown in FIG. 1, a navigation system 10 constituting an embodiment of the present invention is constructed from a map display device 30 comprising a terminal device such as a mobile telephone or the like and a route seek server 20 which are connected via a network 12. In cases where the map display device 30 comprises a mobile telephone, conversation is possible between a mobile communication base station and desired partners (fixed telephones, mobile telephones, photosensors, or the like through a telephone circuit net via a network 12 such as a mobile communication network or the like. Alternatively, a route seek (described later) or route guidance navigation service can be received by connecting the system to a route seek server 20 via a data communication network.

The route seek server 20 is constructed so as to comprise control means 21, transmitting/receiving means 22, route seek means 23, distributed data editing means 24, an operation/display means 25, map/building image data 26, route seek network data 27, and the like. Besides road network data 28, the route seek network data 27 also comprises pedestrian network data 29 such as roads exclusively for use by pedestrians, pedestrian pathways inside parks, and the like. In cases where a search is made for a pedestrian route, a route seek is performed with the pedestrian network data 29 added to the road network data 28.

Although not shown, the control means 21 is a microprocessor which has a RAM, ROM, and processor; this control means controls the operation of various parts via a control program stored in the ROM. The transmitting/receiving means 22 is a communication interface which is used to transmit and receive communication data to and from the map display device 30 and the like via the network 12. The operation/display means 25 is used to monitor and operate the route seek server. The route seek means 23 refers to route seek network data 27 in accordance with route seek requests transmitted from the map display device 30, and searches for the shortest route or several recommended routes from the starting point to the destination using a route seek method such as the universally known Dijkstra method or the like.

The distributed data editing means 24 edits the route data found by the route seek means 23 into data that is distributed to the map display device 30. Furthermore, this means reads out map and building data in a specified range in the vicinity of the current position from the map/building image data 26 on the basis of the current position of the map display device 30, and edits this data into data that is distributed to the map display device 30. In the editing of the route data, guidance points such as intersections and the like, and guidance data such as left or right turns, straight ahead, or the like at these guidance points is added.

The map display device 30 in the present embodiment comprises GPS processing means 35 for receiving GPS satellite signals and calculating the current position (latitude and longitude), and can ascertain the current position; using this current position, the means can request a route seek from the route seek server 20, and can request map information including the current position. The map display device 30 can request a search for a pedestrian route in cases where the user is traveling on foot, and can request a search for an automotive vehicle route so that a person sitting in the front seat next to the driver can guide the driver.

Furthermore, the map display device 30 also comprises control means 31, route seek request means 32, guidance data storage means 33, map/route storage means 34, operation/display means 36, drawing means 37, image data creating means 38, display width coefficient control means 39, and the like.

Although not shown, the control means 31 is a microprocessor which has a RAM, ROM, and processor. The control means 31 controls the operation of various parts via a control program stored in the ROM. The route seek request means 32 is used to edit route seek requests in accordance with route seek conditions such as the starting point, destination, and the like, and to transmit such requests to the route seek server 20. Route seek conditions such as the starting point, destination, and the like are set or input from the operation/display means 36. The GPS processing means 35 receives and processes signals from a GPS satellite, and ascertains the current position of the map display device 30.

The shortest route or recommended route, guidance data, and the like distributed to the map display device 30 from the route seek server 20 are stored in the guidance data storage means 33; furthermore, map data and route data distributed from the route seek server 20 are stored in the map/route storage means 34. The data stored in these storage means is read out as required, and displayed by the operation/display means 36. On the basis of the current position ascertained by the GPS processing means 35, map data having a specified range including this current position is read out from the map/route storage means 34, and image data is created in the image data creating means 38 on the basis of the map data and current position data, and is developed by the drawing means 37.

The drawing means 37 is constructed from a VRAM or the like; image data created by the image data creating means 38 is developed in the VRAM, and displayed by the operation/display means 36. In cases where the map image is displayed as a bird's-eye view map, the display width coefficient control means 39 performs a control function so that image data for the overall map image that is to be displayed is prepared in accordance with the display width coefficient that is predetermined by the image data creating means 38. In the present invention, the display width coefficient control means 39 controls the image data creating means 38, and projects and converts the map image as a whole on the basis of a predetermined display width coefficient; this control means performs a control function so that the road image data undergoes projection transformation using a display width coefficient that is larger than the predetermined display width coefficient mentioned above.

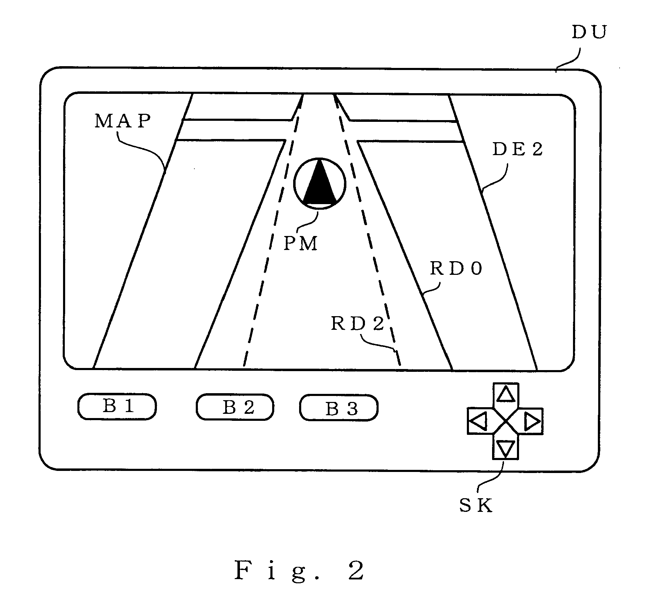

Details will be described below. When the planar map image shown in FIG. 6 undergoes projection transformation at a predetermined display width coefficient, the road image undergoes projection transformation at a display width coefficient that is greater than the predetermined display width coefficient, these images are displayed by the display means, and a bird's-eye view map such as that shown in FIG. 2 is displayed. Specifically, in FIG. 2, the display width coefficient of the road RD image is larger than the display frame DE2 of the map image as a whole; accordingly, the display width on the near side of the screen is displayed as a wider (thicker) display width, as is seen in the case of the road image RD0. The image indicated by a dotted line as the road image RD2 indicates the road image in a case where the road RD undergoes projection transformation at a ratio that is the same as the display width coefficient of the map as a whole, in the same manner as in a conventional system.

Thus, by performing projection transformation with the display width coefficients of the map image as a whole and the road image varied, the road image is displayed with a greater width on the near side of the display screen; accordingly, this image can be displayed as a bird's-eye view map in which the roads are emphasized (strengthened), and the road image corresponding to the guidance route in particular can easily be distinguished.

When such a bird's-eye view map display is performed, the road image alone is displayed with emphasis by a broader width; therefore, the display width of areas adjacent to the broadened road image becomes narrower. Accordingly, portions in which building images in such areas are hidden by the road image are generated. However, the object of the user of the map display device 30 is to distinguish the roads and guidance route, and to receive guidance for the travel of the vehicle up to the destination; accordingly, even if the display is a display in which building images are partially hidden by the road image, there is no particular inconvenience in terms of practical use.

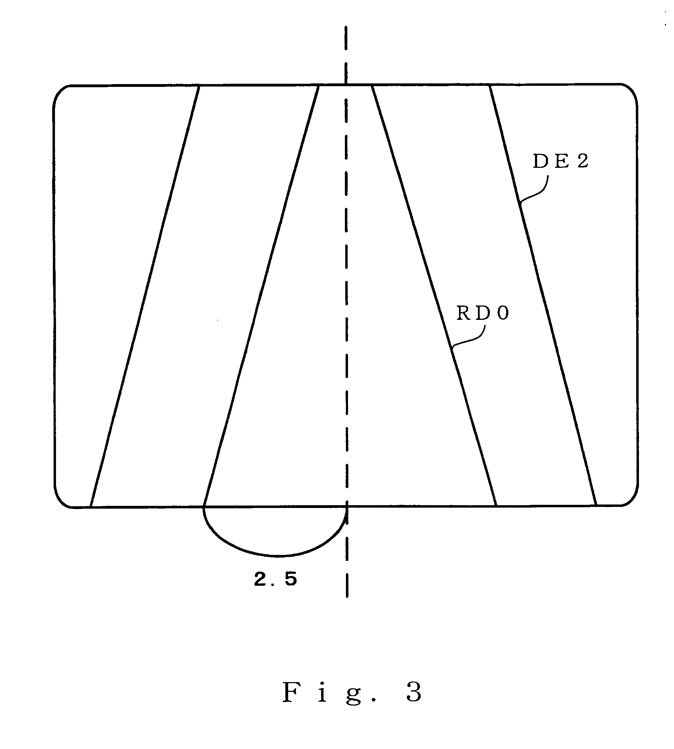

FIG. 3 is a diagram which shows in schematic form a display image obtained by subjecting the planar map shown in FIG. 6 to projection transformation into a bird's-eye view map with the display width coefficient of the roads set at "2.5" as opposed to a display width coefficient of "2" for the map as a whole using the control of the present embodiment described above. In this case, the map image as a whole undergoes projection transformation and is displayed so that the width on the near side of the screen (lower portion of the screen) is "2" as shown in the display frame DE2, and so that the width on the deep side of the screen (upper portion of the screen) is "1." However, the road image RD0 showing the road RD undergoes projection transformation and is displayed at a display width coefficient of "2.5" so that the width on the near side of the screen is "2.5," and so that the width on the deep side of the screen is "1."

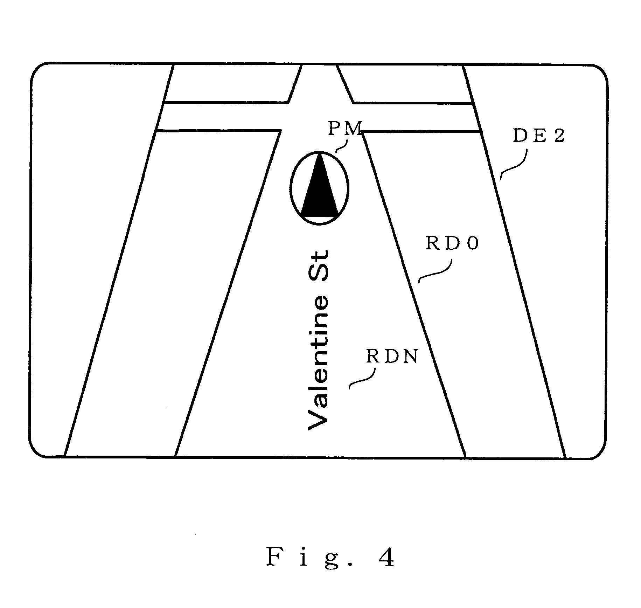

When a road image obtained by projection transformation with the display width coefficient of the road set at a greater value than the display width coefficient of the map image as a whole is displayed as shown in FIG. 3, the road image can be displayed with the width increased on the near side of the screen; accordingly, road names can be displayed in this area. FIG. 4 shows one example of the display image of a bird's-eye view map display according to the present invention in which road names are displayed in a road image obtained by projection transformation with the display width coefficient of the roads increased to a large value. In FIG. 4, road names RDN are displayed superimposed on the road image RD0.

When road names are displayed on roads displayed with the display width coefficient used in the projection transformation of portions of the roads set at a larger value than the display width coefficient used in the projection transformation of the map as a whole, the user can easily distinguish the roads, and can ascertain the road names; in regions where road names and addresses are paired, the user can ascertain the road names of the guidance route, and can infer the locations of landmarks en route, the destination, and the like; accordingly, the convenience of the system can be increased.

### INDUSTRIAL APPLICABILITY

As was described in detail above, the present invention can provide a map display device which is easier to view than conventional bird's-eye view maps by emphasizing the display of the road width when a map is displayed as a bird's-eye view map. Furthermore, road names can be displayed superimposed on road images in a bird's-eye view map display by displaying road widths with a greater width value as emphasis, and the degree of convenience can be increased.

## Claims

1. A map display system comprising:
a database for storing map data; and
display means for displaying a planar map image or a bird's-eye view map image on the basis of map data acquired from the database for storing map images; the map display system being **characterized in** comprising:
image data creating means for creating image data on a planar map or image data on a bird's-eye view map obtained by subjecting the planar map to projection transformation at a predetermined display width coefficient;
drawing means for drawing said image data on the planar map or image data on the bird's-eye view map; and
display width coefficient control means; and
when said image data on the bird's-eye view map is created, said display width coefficient control means controls said image data creating means so that roads on the planar map undergo projection transformation at a display width coefficient that is larger than said predetermined display width coefficient, and said display means displays the image data drawn by said drawing means.

2. The map display system according to claim 1, **characterized in that** when roads on the planar map undergo projection transformation at a display width coefficient that is greater than said predetermined display width coefficient, said image data creating means creates image data in which image data showing road names of the roads is superimposed on said road images that have underwent projection transformation.

3. A map display method in a map display system comprising a database for storing map data, and display means for displaying a planar map image or a bird's-eye view map image on the basis of map data acquired from said database in which map images are stored; the map display method being **characterized in that**:
the map display system is provided with image data creating means for creating image data on a planar map or image data on a bird's-eye view map obtained by subjecting the planar map to projection transformation at a predetermined display width coefficient, drawing means for drawing said image data on the planar map or image data on the bird's-eye view map, and display width coefficient control means; and the method having:
a step in which map data is acquired from said database for storing map images;
a step in which said display width coefficient control means controls said image data creating means so that when said bird's eye view image data is created, roads on the planar map undergo projection transformation at a display width coefficient that is larger than said predetermined display width coefficient; and
a step in which the image data drawn by the drawing means is displayed by the display means.

4. The map display method according to claim 3, **characterized in that** said map display method further comprises a step in which said image data creating means creates image data such that image data indicating road names of roads is superimposed on the projection-transformed road images when roads on the planar map undergo projection transformation at a display width coefficient that is greater than said predetermined display width coefficient.

5. A map display device which is connected via a network to a route seek server having a database for storing map data; said map display device **characterized in** comprising:
display means for displaying planar map images or bird's-eye view map images on the basis of map data acquired from said database for storing map images; and further comprising:
image data creating means for creating image data on a planar map, or image data on a bird's-eye view map obtained by subjecting the planar map to projection transformation at a predetermined display width coefficient;
drawing means for drawing said image data on the planar map or image data on the bird's-eye view map; and
display width coefficient control means; and
when image data on the bird's-eye view map is created, said display width coefficient control means controls said image data creating means so that roads on the planar map undergo projection transformation at a display width coefficient that is greater than said predetermined display width coefficient, and said display means displays the image data that is drawn by said drawing means.

6. The map display device according to claim 5, **characterized in that** when roads on the planar map undergo projection transformation at a display width coefficient that is greater than said predetermined display width coefficient, said image data creating means creates image data such that image data indicating road names of the roads is superimposed on said road images that have underwent projection transformation.

7. A program, **characterized in that**
a computer which constitutes a map display device connected via a network to a route seek server having a database for storing map data, and which comprises display means for displaying a planar map image or a bird's-eye view map image on the basis of map data acquired from said database for storing map images, image data creating means for creating image data on a planar map or image data on a bird's-eye view map obtained by subjecting the planar map to projection transformation at a predetermined display width coefficient, drawing means for drawing said image data on the planar map or image data on the bird's-eye view map, and display width coefficient control means,
is caused to execute a process as said display width coefficient control means for controlling said image data creating means so that when said image data on the bird's-eye view map is created, roads on said planar map undergo projection transformation at a display width coefficient that is greater than said predetermined display width coefficient; and a process for displaying the image data drawn by said drawing means on said display means.

8. The program according to claim 7, **characterized in that** when the roads on the planar map undergo projection transformation at a display width coefficient that is greater than said predetermined display width coefficient, the computer that constitutes said map display device is caused to execute a process as said image data creating means for creating image data such that image data indicating the names of the roads is superimposed on said road images obtained by projection transformation.
